# EUROPÄISCHE PATENTANMELDUNG

(11) **EP 4 292 840 A2**
(43) Veröffentlichungstag der Anmeldung: **20.12.2023**
(21) Anmeldenummer: 23020297.0
(22) Anmeldetag: 16.06.2023
(51) Int. Cl.: B60H 1/00

(54) **THERMOMANAGEMENTANORDNUNG UND FAHRZEUG MIT ZUMINDEST EINER SOLCHEN THERMOMANAGEMENTANORDNUNG**

(30) Priorität: 16.06.2022 DE 102022002189; 10.10.2022 DE 202022002213 U; 22.12.2022 DE 102022004859; 22.12.2022 DE 102022004860
(71) Anmelder: Voss Automotive GmbH, 51688 Wipperfürth (DE)
(72) Erfinder: ETSCHEID, Tobias, 51789 Lindlar (DE); KOHLGRÜBER, Markus, 51789 Lindlar (DE); RAJAN, Philippose, 50999 Köln (DE)
(74) Vertreter: Rebbereh, Cornelia

(57) **Zusammenfassung**

Bei einem Thermomanagementanordnung (1) für ein Fahrzeug, umfassend eine Anzahl elektronisch geregelter und/oder elektrischer Komponenten (10, 10a, 10b, 10n, 11, 11a, 11b, 11n, 12, 12a, 12b, 12n, 13, 13a, 13b, 13n), eine Anzahl elektrischer Leiter (14a, 14b, 15a, 15b, 15c, 16a, 16b, 16c, 17a, 17b, 35a, 35b, 35n, 36a, 36b, 36n, 37a, 37b, 37n) und zumindest eine Fahrzeugsteuerungseinheit (4) mit zumindest einem elektrischen Verbinder (40, 41, 42, 43) zum elektrischen Verbinden der Anzahl elektronisch geregelter und/oder elektrischer Komponenten (10, 10a, 10b, 10n, 11, 11a, 11b, 11n, 12, 12a, 12b, 12n, 13, 13a, 13b, 13n) mit der zumindest einen Fahrzeugsteuerungseinheit (4), umfasst die Thermomanagementanordnung (1) zumindest ein Thermomanagement-Modul (2), das die Anzahl elektronisch geregelter und/oder elektrischer Komponenten (10, 10a, 10b, 10n, 11, 11a, 11b, 11n, 12, 12a, 12b, 12n, 13, 13a, 13b, 13n), die als eine Baugruppe in räumlicher Nähe zueinander angeordnet sind, umfasst, wobei das zumindest eine Thermomanagement-Modul (2) einen elektrischen Sammelverbinder (20) aufweist und die Anzahl elektronisch geregelter und/oder elektrischer Komponenten (10, 10a, 10b, 10n, 11, 11a, 11b, 11n, 12, 12a, 12b, 12n, 13, 13a, 13b, 13n) des Thermomanagement-Moduls (2) elektrisch mit dem elektrischen Sammelverbinder (40, 41, 42, 43) des zumindest einen Thermomanagement-Moduls (2) verbindbar oder verbunden ist und sich ein elektrischer Leiterstrang (3) zwischen dem Thermomanagement-Modul (2) und der Fahrzeugsteuerungseinheit (4) erstreckt.

## Beschreibung

Die Erfindung betrifft eine Thermomanagementanordnung für ein Fahrzeug, umfassend eine Anzahl elektronisch geregelter und/oder elektrischer Komponenten, eine Anzahl elektrischer Leiter und zumindest eine Fahrzeugsteuerungseinheit mit zumindest einem elektrischen Verbinder zum elektrischen Verbinden der Anzahl elektronisch geregelter und/oder elektrischer Komponenten mit der zumindest einen Fahrzeugsteuerungseinheit, sowie ein Fahrzeug mit zumindest einer solchen Thermomanagementanordnung.

In heutigen Fahrzeugen, insbesondere Elektrofahrzeugen und Hybridfahrzeugen, sind immer mehr elektronisch geregelte Komponenten, wie beispielsweise elektrisch verstellbare Regelventile, elektrisch verstellbare Pumpen, eine Vielzahl von Sensoren etc., entlang von Fluidkreisläufen, wie Kühlkreisläufen, des Fahrzeugs angeordnet. Hierdurch ergibt sich der Vorteil eines bedarfsgerechten und fahrzustandsoptimierten Thermomanagements, das einerseits den Fahrkomfort, andererseits eine Reichweitenoptimierung unterstützt. Die Vielzahl elektronisch geregelter Komponenten führt allerdings auch dazu, dass die Anzahl der elektrischen Leiter und der Versorgung der einzelnen elektronisch geregelten Komponenten stark zugenommen hat und zu komplexen Kabelbaumstrukturen führt. Die einzelnen elektronisch geregelten Komponenten sind dezentral im Fahrzeug angeordnet, so dass eine große Anzahl elektrischer Leiter innerhalb des Fahrzeugs verlegt werden muss. Gerade bei hydraulischen Komponenten eines Fahrzeugs wird deren elektrische Verkabelung durch Einzelverbindung von einer Fahrzeugsteuerungseinheit zu der jeweiligen Komponente ausgeführt, wobei die Einzelkomponente jeweils durch einzelne elektrische Steckverbinder mit den jeweiligen elektrischen Leitern elektrisch verbunden wird. Ferner weist jede der geregelten bzw. gesteuerten Komponenten eine eigene Steuerung bzw. Elektronik auf. Hierdurch ergibt sich die Notwendigkeit des Ausbildens sehr komplexer Kabelbaumsätze, die alle im Fahrzeug verlegt werden müssen. Ferner besteht ein erhöhtes Fehlerpotential bei dem Erstellen der Kabelbaumsätze aufgrund von deren Komplexität.

Beispielsweise ist aus der DE 10 2020 206 268 A1 ein Thermomanagementsystem für eine Batterie eines Kraftfahrzeugs, insbesondere eines Elektrofahrzeugs, eines batterieelektrischen Fahrzeugs oder eines Hybridelektrokraftfahrzeugs, bekannt, das eine Steuereinheit, einen ersten Kühlmittelkreislauf, wobei der erste Kühlmittelkreislauf eine Batterie, einen Chiller und eine erste Pumpe aufweist, und einen zweiten Kühlmittelkreislauf umfasst, wobei der zweite Kühlmittelkreislauf einen Zuheizer, einen Heizungswärmetauscher und eine zweite Pumpe aufweist, wobei der erste und der zweite Kühlmittelkreislauf über eine Kopplungsvorrichtung thermisch oder thermisch-fluidisch miteinander gekoppelt sind. Die Steuereinheit ist dabei so ausgebildet, dass die Leistungen der ersten Pumpe und der zweiten Pumpe zur Erfüllung der Anforderungen an ein Thermomanagement geregelt werden. Aus dieser Druckschrift des Standes der Technik lässt sich die Komplexität eines solchen Thermomanagementsystems mit mehreren Kühlkreisläufen mit einer Anzahl von Komponenten, wie Pumpen, Batterien, Zuheizern, etc. entnehmen, wobei die Kühlkreisläufe miteinander gekoppelt und ineinander verschachtelt sind.

Auch aus der US 8,974,942 B2 ist ein sehr komplex aufgebautes Batterie-Thermomanagementsystem bekannt. Dieses umfasst zumindest eine Batterie, eine erste thermoelektrische Anordnung und eine zweite thermoelektrische Anordnung in thermischer Verbindung mit der Batterie, wobei die erste und die zweite thermoelektrische Anordnung jeweils thermoelektrische Geräte enthält und die erste und zweite thermoelektrische Anordnung elektrisch miteinander verbunden sind. Ferner sind die thermoelektrischen Geräte der ersten thermoelektrischen Anordnung in zwei Gruppen, eine erste und eine zweite Gruppe, aufgeteilt, wobei die thermoelektrischen Geräte der ersten Gruppe und die thermoelektrischen Geräte der zweiten Gruppe jeweils zueinander elektrisch parallel geschaltet sind. Die thermoelektrischen Geräte der zweiten thermoelektrischen Anordnung sind ebenfalls in zwei Gruppen aufgeteilt, bei denen die thermoelektrischen Geräte untereinander in entsprechender Weise zueinander parallel geschaltet sind. Die einzelnen thermoelektrischen Geräte enthalten wiederum eine Vielzahl von thermoelektrischen Elementen. Ein elektrisch mit der ersten und zweiten thermoelektrischen Anordnung in elektrischer Verbindung stehender Kreis kann wahlweise die erste thermoelektrische Anordnung entweder in Reihe oder parallel zu der zweiten thermoelektrischen Anordnung als Reaktion auf zumindest einen Parameter schalten, wobei der zumindest eine Parameter zumindest eine Fluidtemperatur eines Fluids, das in thermischer Verbindung mit der Batterie steht, umfasst.

Auch aus der DE 10 2019 210 577 A1 ist ein Thermomanagementsystem zur Verwendung in einem Fahrzeug bekannt, wobei das Thermomanagementsystem einen ersten Kühlkreislauf für eine Batterie und einen zweiten Kühlkreislauf für einen E-Motor zum Antrieb des Fahrzeugs umfasst, wobei die beiden Kühlkreisläufe mittels eines Mehrwegeventils in einem ersten Modus des Systems und in einer ersten Ventilstellung des Mehrwegeventils in Reihe und in einem zweiten Modus des Systems und in einer zweiten Ventilstellung des Mehrwegeventils parallel zueinander geschaltet sind. In einem dritten Modus des Systems und in einer dritten Ventilstellung nimmt das Mehrwegeventil eine Zwischenstellung ein, in welcher sich die Kühlflüssigkeitsströme der beiden Kühlkreisläufe miteinander bedarfsgerecht vermischen. Neben den beiden Kühlkreisläufen ist auch noch ein Bypasspfad vorgesehen, ebenso wie ein weiteres Mehrwegeventil und somit auch weitere Betriebsmodi. Somit ist auch dieses Thermomanagementsystem sehr komplex aufgebaut.

Entsprechendes gilt auch für das aus der DE 10 2020 206 727 A1 bekannte Thermomanagementsystem für eine Batterie eines Kraftfahrzeugs, das ebenfalls einen ersten Kühlmittelkreislauf, einen zweiten Kühlmittelkreislauf und einen dritten Kühlmittelkreislauf umfasst. Der erste Kühlmittelkreislauf wird thermischfluidisch wahlweise mit dem zweiten Kühlmittelkreislauf und/oder dem dritten Kühlmittelkreislauf durch Schalten eines Vier-Wege-Ventils gekoppelt. Der erste Kühlmittelkreislauf umfasst eine Batterie, einen Chiller und eine erste Pumpe, der zweite Kühlmittelkreislauf einen Zuheizer, einen Heizungswärmetauscher und eine zweite Pumpe und der dritte Kühlmittelkreislauf einen Wärmeübertrager und eine dritte Pumpe. Die Komplexität des Thermomanagementsystems ist insbesondere auch den Figuren dieser Druckschrift des Standes der Technik sehr gut zu entnehmen.

Eine solche Komplexität eines Thermomanagementsystems kann auch der DE 11 2011 103 888 T5 entnommen werden. Das System gemäß diesem Stand der Technik umfasst einen Verbrennungsmotor und ein erstes Kühlmittel, das mit dem Verbrennungsmotor thermisch gekoppelt ist und durch eine erste Pumpe umgewälzt wird. Es umfasst ferner eine elektrische Komponente und ein zweites Kühlmittel, das mit der elektrischen Komponente thermisch gekoppelt ist und durch eine zweite Pumpe umgewälzt wird. Ferner weist das System einen ersten Wärmetauscher auf, der Wärmeenergie zwischen dem ersten Kühlmittel und dem zweiten Kühlmittel überträgt, und einen Zusatzfluidstrom mit einer Temperatur, die niedriger ist als eine Soll-Betriebstemperatur für die elektrische Komponente. Ferner weist das System einen zweiten Wärmetauscher auf, der Wärmeenergie zwischen dem zweiten Kühlmittel und dem Zusatzfluidstrom überträgt.

Auch der DE 11 2017 000 575 T5 kann die Komplexität eines solchen Thermomanagementsystems sehr gut entnommen werden. Die Thermomanagementvorrichtung für ein Fahrzeug gemäß dieser Druckschrift des Standes der Technik weist einen ersten Wärmeträgerpfadabschnitt und einen zweiten Wärmeträgerpfadabschnitt, durch die ein Wärmeträger strömt, eine Abwärmezuführvorrichtung, die den Wärmeträger, der durch den zweiten Wärmeträgerpfadabschnitt strömt, Abwärme zuführt, einen Erwärmungswärmetauscher, der Wärme zwischen Luft, die in ein Fahrzeuginneres geblasen werden soll, und dem Wärmeträger tauscht, um die Luft zu erwärmen, einen Umschaltabschnitt, der zwischen einem Zustand, in dem der Wärmeträger zwischen dem Erwärmungswärmetauscher und dem ersten Wärmeträgerpfadabschnitt zirkuliert, und einen zweiten Zustand umschaltet, in dem der Wärmeträger zwischen dem Erwärmungswärmetauscher und dem zweiten Wärmeträgerpfadabschnitt zirkuliert, einen Einstellabschnitt, mittels dessen eine Temperatur des Wärmeträgers in dem ersten Wärmeträgerpfadabschnitt eingestellt wird, und ein Steuerungsmittel auf. Das Steuerungsmittel steuert einen Betrieb des Einstellabschnitts so, dass die Temperatur des Wärmeträgers in dem ersten Wärmeträgerpfadabschnitt gleich wie oder höher als eine vorbestimmte Temperatur ist. Wenn der Umschaltabschnitt festgelegt ist, wird der Wärmeträger zwischen dem Erwärmungswärmetauscher und dem zweiten Wärmeträgerpfadabschnitt zirkuliert.

Aus der DE 10 2016 102 116 A1 ist der komplexe Aufbau eines Batterie-Thermomanagementsystems bekannt, wobei dieses eine Batteriebaugruppe und ein Kühlmittelteilsystem, das ein Kühlmittel durch die Batteriebaugruppe zirkulieren lässt, umfasst, wobei die Batteriebaugruppe durch einen ersten Teil des Kühlmittels von einer Kraftmaschine erwärmt wird, wenn eine Temperatur der Batteriebaugruppe unterhalb eines ersten Temperaturschwellenwerts liegt, und durch einen zweiten Teil des Kühlmittels von einem Kühlaggregat gekühlt wird, wenn die Temperatur oberhalb eines zweiten Temperaturschwellwertes liegt. Das Kühlmittelsystem umfasst u.a. die Kraftmaschine, einen Kühler, ein Drei-Wege-Ventil, einen Temperatursensor, eine Pumpe und einen Kühlaggregatkreislauf, der das Kühlaggregat umfasst. Ersichtlich sind hier auch eine Anzahl von Komponenten in dem Batterie-Thermomanagementsystem enthalten, die über verschiedene Kühlmittelleitungen und elektrische Leiter miteinander bzw. mit der Fahrzeugsteuerungseinheit verbunden sind.

Aus der WO 2015/149764 A1 ist ein Kühlsystem einer Brennkraftmaschine bekannt, das komplex aufgebaut ist und das als ein Split-Kühlsystem ausgelegt ist und zumindest zwei Kühlkreise umfasst, die von einem Kühlmittelstrom einer Kühlmittelpumpe beaufschlagt werden. Zur Regelung von Kühlmittelströmen der Kühlkreise sind ein als Drehschieber mit zugehöriger Aktuatorik ausgeführtes Wärmemanagementmodul und ein Thermostat eingesetzt. Das Drehschiebergehäuse weist mehrere von Kühlmittel durchströmbare Ausgänge oder Anschlüsse auf. Das Wärmemanagementmodul ist zur Regelung des ersten Kühlkreises des Kühlsystems und das als Split-Kühlthermostat ausgeführte Thermostat zur Regelung des weiteren Kühlkreises vorgesehen. In einzelnen Warmlaufphasen der Brennkraftmaschine sind die Ausgänge, ein als Bypass ausgeführter, mit der Kühlmittelpumpe verbundener Anschluss des Drehschiebergehäuses sowie die Leckageöffnung des Thermostats bedarfsabhängig gemeinsam oder getrennt gezielt absperrbar.

Aus der DE 10 2005 041 326 A1 ist ein Leitungssatz zur Anbindung elektrischer Komponenten in einem Cockpit eines Kraftfahrzeuges an ein Bordnetz des Kraftfahrzeuges bekannt, wobei ein Cockpitleitungssatz, der eine einzige Hauptanschlussstelle zum Bordnetz aufweist, vorgesehen ist. Die elektrischen Komponenten gehören zu jeweils einem von zumindest zwei Modulen. Der Cockpitleitungssatz weist zu jedem der zumindest zwei Module eine Modulanschlussstelle auf. Die elektrischen Komponenten sind über einen Modulleitungssatz des zugehörigen Moduls an die Modulanschlussstelle angebunden. Jedes der Module weist eine Schnittstelle auf, welche als Buchse und identisch zueinander, mit gleicher Pin-Belegung, ausgeführt sind. Als Gegenstücke sind am Cockpitleitungssatz identisch zueinander aufgebaute Anschlussstecker angebracht. Der Cockpitleitungssatz besteht aus einer Hauptanschlussstelle, einem Kabelstrang mit zwei Unterkabelsträngen und einer Einzelleitung sowie aus drei identischen Modulanschlussstellen. Diese Druckschrift bezieht sich nicht auf die Problematik eines Handlings von Verlegewegen einer Vielzahl von Komponenten von Kühlkreisläufen eines Thermomanagementsystems in einem Fahrzeug mit einer entsprechend großen Anzahl an elektrischen Leitern, die in einem Fahrzeug verlegt werden müssen, sondern lediglich auf einen Leitungssatz zur Anbindung von elektrischen Komponenten in einem Cockpit eines Fahrzeugs, was deutlich weniger komplex als die vorstehende Problematik bei Thermomanagementsystemen ist.

Aus der DE 10 2006 010 640 A1 ist ein elektronisches Steuerungssystem zum Einsatz in einem Kraftfahrzeug oder einer mobilen Arbeitsmaschine bekannt, das ein Steuergerät und weitere mit dem Steuergerät verbundene Elektronikkomponenten und einen Kabelstrang umfasst, der das Steuergerät mit den Elektronikkomponenten verbindet und der einen Stecker aufweist, mit dem er an einer Anschlussbuchse des Steuergeräts angeschlossen werden kann. In einem Gehäuse des Steckers ist ein Halbleiterspeicherbaustein angeordnet, wobei der Halbleiterspeicherbaustein über an den Stecker geführte Signalleitungen mit dem Steuergerät verbunden werden kann. Auch aus dieser Druckschrift des Standes der Technik kann keine Lösung für die vorstehende Problematik einer Vielzahl von Komponenten von Kühlkreisläufen eines Thermomanagementsystems mit einer Vielzahl von elektrischen Leitern, um eine Signalverbindung von den elektronisch geregelten Komponenten zur Fahrzeugsteuerungseinheit herzustellen, entnommen werden, da auch bei dieser Druckschrift des Standes der Technik von den verschiedenen Komponenten Kabel zunächst zu dem Kabelstrang zusammengeführt werden müssen. Die von den Komponenten zu dem Kabelstrang geführten elektrischen Leiter müssen jedoch weiterhin im Fahrzeug oder der mobilen Arbeitsmaschine verlegt werden.

Entsprechendes gilt auch für die Fahrzeugkabelbaumstruktur gemäß der DE 11 2017 001 003 T5. Diese umfasst einen ersten Kabelbaum, der konfiguriert ist, um eine erste elektrische Komponente und einen Hauptsteuerfunktionsabschnitt miteinander zu verbinden, wobei die erste elektrische Komponente an einem Fahrzeug befestigt ist und der Hauptsteuerfunktionsabschnitt die erste elektrische Komponente steuert. Ferner umfasst die Fahrzeugkabelbaumstruktur einen zweiten Kabelbaum, dessen eines Ende mit dem Hauptsteuerfunktionsabschnitt verbunden ist, wobei der zweite Kabelbaum einen Untersteuerfunktionsabschnitt aufweist, der an dem anderen Ende des zweiten Kabelbaums vorgesehen ist, um eine zweite elektrische Komponente zu steuern, die an dem Fahrzeug montiert ist. Ferner ist ein dritter Kabelbaum offenbart, dessen eines Ende mit dem zweiten Kabelbaum verbunden ist, wobei der dritte Kabelbaum einen Untersteuerfunktionsabschnitt aufweist, der an dem anderen Ende des dritten Kabelbaums vorgesehen ist, um eine dritte elektrische Komponente, die an dem Fahrzeug montiert ist, zu steuern. Es sind somit verschiedene Kabelbäume vorgesehen, die alle in einem Fahrzeug verlegt werden müssen.

Die WO 2004/078525 A1 offenbart einen Kabelsatz für Kraftfahrzeuge, in dem eine Anzahl von elektrischen und/oder optischen Leitungen zu einer Einheit zusammengefasst ist, die in Montageposition zur Übertragung von Strom und/oder Signalen in einem Kraftfahrzeug und/oder in einem mit demselben verbindbaren Zusatzfahrzeug zwischen zumindest einer an eine Spannungsquelle angeschlossenen Steuereinheit und Verbrauchern angeordnet sind. Zur Vereinfachung des Aufbaus ist eine durch eine gemeinsame Umhüllung verbundene erste Einheit von Leitungen vorhanden, die an ihrem einen Ende jeweils zum Anschluss an die Steuereinheit vorgesehen und mit ihren anderen Enden in ein Gehäuse eines Verteilers feuchtigkeitsdicht eingeführt sind. In das Gehäuse des Verteilers sind zumindest zwei voneinander getrennte, weiterführende Einheiten mit zumindest einer Leitung mit ihrem einen Ende feuchtigkeitsdicht eingeführt, die jeweils ebenfalls eine gemeinsame Umhüllung aufweisen, und die mit ihren anderen Enden zum Anschluss an Verbraucher vorgesehen sind. Die Leiter der Leitungen der ersten Einheit und der weiterführenden Einheiten sind im Gehäuse des Verteilers nach vorgegebenen Regeln leitend miteinander verbunden und das Gehäuse ist insgesamt feuchtigkeitsdicht ausgeführt. Auch aus dieser Druckschrift ergibt sich kein Hinweis auf eine Lösung der Problematik komplexer Verlegewege bei einem Thermomanagementsystem.

Durch die Vielzahl an Komponenten der Kühlkreisläufe eines Thermomanagementsystems und somit auch die Vielzahl an elektrischen Leitern, die in einem Fahrzeug verlegt werden müssen, ist das Designen der geeigneten Verlegungswege von diesen innerhalb der Karosserie des Fahrzeugs sehr anspruchsvoll und das Handling der Kabelbäume sehr aufwendig. Während der Montage ist es erforderlich, jede der Komponenten einzeln über deren Steckverbinder elektrisch anzuschließen, was auch mit einem hohen Zeitaufwand verbunden ist. Für den Fall, dass einzelne Komponenten während der Lebensdauer des Fahrzeugs ausfallen, ist deren Austausch ebenfalls sehr zeitaufwendig und die Komponenten sind ggf. schlecht zugänglich im Fahrzeug eingebaut. Auch die Buslast eines Fahrzeug-Datenbusses, über den die Steuerung der einzelnen Busteilnehmer, somit elektronisch geregelten und/oder elektrischen Komponenten des Fahrzeugs von der Fahrzeugsteuerungseinheit aus erfolgt, ist sehr hoch. Da die einzelnen elektronisch geregelten Komponenten von unterschiedlichsten Herstellern seitens des Fahrzeugherstellers eingekauft werden, ist auch der Verwaltungsaufwand sehr hoch und hierbei insbesondere das Schnittstellenhandling sehr aufwendig.

Der vorliegenden Erfindung liegt daher die Aufgabe zugrunde, eine Thermomanagementanordnung für ein Fahrzeug, umfassend eine Anzahl elektronisch geregelter und/oder elektrischer Komponenten, eine Anzahl elektrischer Leiter, und zumindest eine Fahrzeugsteuerungseinheit mit zumindest einem elektrischen Verbinder zum elektrischen Verbinden der Anzahl elektronisch geregelter und/oder elektrischer Komponenten mit der zumindest einen Fahrzeugsteuerungseinheit zu schaffen, mittels derer es möglich ist, die vorstehenden Nachteile zu vermeiden und insbesondere weniger komplexe Kabelbaumstrukturen vorsehen zu müssen und somit auch das Kabelbaumhandling in einem Fahrzeug weniger aufwendig zu gestalten.

Die Aufgabe wird für eine Thermomanagementanordnung nach dem Oberbegriff des Anspruchs 1 dadurch gelöst, dass die Thermomanagementanordnung zumindest ein Thermomanagement-Modul umfasst, das die Anzahl elektronisch geregelter und/oder elektrischer Komponenten, die als eine Baugruppe in räumlicher Nähe zueinander angeordnet sind, umfasst und das zumindest eine Thermomanagement-Modul einen elektrischen Sammelverbinder aufweist, wobei die Anzahl elektronisch geregelter und/oder elektrischer Komponenten des Thermomanagement-Moduls elektrisch mit dem elektrischen Sammelverbinder des zumindest einen Thermomanagement-Moduls verbindbar oder verbunden ist und sich ein elektrischer Leiterstrang zwischen dem Thermomanagement-Modul und der Fahrzeugsteuerungseinheit erstreckt. Für ein Fahrzeug, insbesondere Elektrofahrzeug oder batterieelektrisches Fahrzeug, wird die Aufgabe dadurch gelöst, dass das Fahrzeug zumindest eine solche Thermomanagementanordnung umfasst. Weiterbildungen der Erfindung sind in den abhängigen Ansprüchen definiert.

Dadurch wird eine Thermomanagementanordnung für ein Fahrzeug geschaffen, bei der zumindest ein Thermomanagement-Modul vorgesehen ist, das die Anzahl an elektronisch geregelten und/oder elektrischen Komponenten umfasst, die als eine Baugruppe in räumlicher Nähe zueinander angeordnet sind. Dies bedeutet, dass die einzelnen elektronisch geregelten und/oder elektrischen Komponenten, beispielsweise zumindest eine Pumpe, zumindest ein Sensor, zumindest ein Aktuator, zumindest ein Ventil, etc., optimal dicht bzw. nahe beieinander angeordnet sind und als Baugruppe das zumindest eine Thermomanagement-Modul bilden. Alle elektronisch geregelten und/oder elektrischen Komponenten des Thermomanagement-Moduls sind auf einem Trägerteil angeordnet. Hierdurch ist es möglich, sie optimal dicht bzw. nahe beieinander anzuordnen. Durch das Vorsehen des Trägerteils des Thermomanagement-Moduls ist es möglich, die Anzahl an elektronisch geregelten und/oder elektrischen Komponenten bauraumoptimiert außerhalb eines Fahrzeugs auf dem Trägerteil vorzumontieren. Das Thermomanagement-Modul ist somit kompakt ausgeführt, wobei alle Komponenten des Thermomanagement-Modules, d.h. elektrische Leitungen, Fluidleitungen, Pumpe(n), Ventil(e) etc. auf oder in dem Trägerteil angeordnet sind. Die kompakte Ausführung des Thermomanagement-Moduls erweist sich als sehr vorteilhaft, da je nach Ausführung des batterieelektrisch betriebenen oder Elektrofahrzeugs oder ggf. auch Brennstoffzellenfahrzeugs, das Thermomanagement-Modul an verschiedenen Stellen im Fahrzeug angeordnet werden kann, z.B. an unterschiedlichen Stellen bei einem elektrisch betriebenen Fahrzeug mit einer vergleichsweise sehr kleinen oder bei einem mit einer vergleichsweise sehr großen Fahrzeugbatterie. Der Trägerteil bzw. das Thermomanagement-Modul kann in jeder beliebigen räumlichen Anordnung in einem Fahrzeug angeordnet werden, z.B. in einer waagerechten Anordnung im Raum.

Das Thermomanagement-Modul weist nur einen elektrischen Sammelverbinder auf, so dass nicht mehrere verschiedene Kabelbäume oder Kabelsätze von den jeweiligen einzelnen elektronisch geregelten und/oder elektrischen Komponenten in dem Fahrzeug verlegt zu werden brauchen, sondern lediglich ein elektrischer Leiterstrang sich zwischen Thermomanagement-Modul und Fahrzeugsteuerungseinheit erstreckt. Dieser elektrische Leiterstrang kann unterschiedliche einzelne Leiter umfassen. Angeschlossen wird der elektrische Leiterstrang auf der Seite des Thermomanagement-Moduls an dem elektrischen Sammelverbinder und seitens der Fahrzeugsteuereinheit an dem zumindest einen elektrischen Verbinder von dieser. Innerhalb des Thermomanagement-Moduls können mehrere einzelne Steckverbinder vorgesehen sein, die den einzelnen elektronisch geregelten und/oder elektrischen Komponenten des Thermomanagement-Moduls zugeordnet sind. Um es jedoch zu ermöglichen, dass nur ein elektrischer Leiterstrang zwischen dem Thermomanagement-Modul und der Fahrzeugsteuerungseinheit verlegt zu werden braucht, weist das Thermomanagement-Modul den einen elektrischen Sammelverbinder auf. Dieser kann innerhalb des Thermomanagement-Moduls jedoch mit mehreren den Komponenten zugeordneten Steckverbindern verbindbar oder verbunden sein. Insbesondere können hier unterschiedliche Leiter mit jeweils geeigneten Steckverbindern versehen und mit dem elektrischen Sammelverbinder verbunden sein bzw. werden. Der elektrische Sammelverbinder ist dementsprechend insbesondere mit unterschiedlichen Steckplätzen zum Verbinden mit solchen unterschiedlichen Steckverbindern, die von den einzelnen Komponenten des Thermomanagement-Moduls ausgehend sich zu dem elektrischen Sammelverbinder erstrecken, elektrisch verbindbar oder verbunden.

Unter einer Thermomanagementanordnung wird hier die Untergruppe eines Thermomanagementsystems verstanden, die die elektronisch geregelten und/oder elektrischen Komponenten und deren Steuerungseinheiten als Teile des Thermomanagement-Moduls sowie die Fahrzeugsteuerungseinheit und die elektrischen Verbindungen zwischen dieser und dem Thermomanagement-Modul umfasst.

Die Anzahl elektronisch geregelter und/oder elektrischer Komponenten des Thermomanagement-Moduls sind jeweils komponentenabhängig über zumindest einen elektrischen Leiter mit dem elektrischen Sammelverbinder des Thermomanagement-Moduls verbunden. Diese elektrischen Verbindungen liegen innerhalb des Thermomanagement-Moduls auf engem Raum beieinander, sind nämlich auf dem bereits genannten Trägerteil des Thermomanagement-Moduls angeordnet, so dass nicht mühevoll eine große Anzahl an einzelnen elektrischen Leitern von einer jeweiligen elektronisch geregelten und/oder elektrischen Komponente innerhalb des Fahrzeugs zu der Fahrzeugsteuerungseinheit verlegt zu werden braucht. Vorteilhaft sind zum elektrischen Verbinden der Anzahl elektronisch geregelter und/oder elektrischer Komponenten des Thermomanagement-Moduls mit dessen elektrischen Sammelverbinder in dem zumindest einen Thermomanagement-Modul vorverlegte elektrische Leiter angeordnet. Das Thermomanagement-Modul umfasst somit nicht nur die einzelnen elektronisch geregelten und/oder elektrischen Komponenten, wie Pumpen, Ventile, Sensoren, Aktuatoren und Steuerungseinheiten bzw. Elektronik zum Ansteuern und Regeln der einzelnen Komponenten, sondern auch in dem Thermomanagement-Modul bereits vorverlegte elektrische Leiter zum Verbinden der einzelnen elektronisch geregelten und/oder elektrischen Komponenten mit dem elektrischen Sammelverbinder des Thermomanagement-Moduls.

Vorteilhaft ist das zumindest eine Thermomanagement-Modul als eine autarke Einheit ausgebildet. Diese ist über lediglich den einen elektrischen Leiterstrang mit der Fahrzeugsteuerungseinheit verbunden bzw. kann mit dieser hierüber verbunden werden durch Verbinden des elektrischen Leiterstrangs einerseits mit dem elektrischen Sammelverbinder des Thermomanagement-Moduls und andererseits mit dem zumindest einen elektrischen Verbinder der Fahrzeugsteuerungseinheit. Die autarke Einheit des Thermomanagement-Moduls kann ferner insbesondere zentral im Fahrzeug angeordnet werden. Sie kann zudem vorteilhaft alle zum Fördern von Kühlmittel zu und von den einzelnen Komponenten des Thermomanagement-Moduls erforderlichen fluidischen Leitungen zusätzlich zu den elektrischen Leitern umfassen, wobei das Kühlmittel durch verschiedene Kühlmittelkreisläufe strömt bzw. strömen kann, um Fahrzeugkomponenten, wie zumindest eine Traktions- oder Fahrzeugbatterie, ggf. vorhandene elektrische Zuheizer, Leitungselektronik etc. eines elektrisch bzw. batterieelektrisch betriebenen Fahrzeugs in einer gewünschten Weise zu temperieren.

Weiter vorteilhaft ist der elektrische Sammelverbinder des zumindest einen Thermomanagement-Moduls zum Anschließen unterschiedlicher elektrischer Leiter ausgebildet. Insbesondere kann der elektrische Sammelverbinder zum Anschließen zumindest eines Leistungsstromleiters zum Versorgen einer Pumpe und/oder eines elektrischen Heizers, zumindest eines elektrischen Leiters zum Übertragen von Sensorsignalen, insbesondere Signalen eines Temperatursensors, und zumindest einer Datenbusleitung zum Übertragen von Bussignalen ausgebildet sein. Der elektrische Sammelverbinder ist vorteilhaft somit zum Anschließen sowohl elektrischer Leiter, die als Leistungsstromleiter ausgebildet sind und dementsprechend einen großen Querschnitt aufweisen, als auch elektrischer Leiter zum Übertragen von Signalen als auch elektrischer Leiter, die als Datenbusleitung zum Übertragen von Daten ausgebildet sind, geeignet ausgebildet. Dies kann über unterschiedliche Steckbuchsen des elektrischen Sammelverbinders gelöst werden, an die die entsprechenden elektrischen Leiter angeschlossen werden und die so ausgebildet sind, dass auch der elektrische Leiterstrang dort immer eineindeutig angesteckt bzw. angefügt werden kann.

Die elektronisch geregelte(n) oder gesteuerte(n) Komponente(n), insbesondere die zumindest eine Pumpe und/oder das zumindest eine Ventil, des Thermomanagement-Moduls kann/können jeweils mit einer eigenen Steuerungseinheit versehen sein oder werden. Insbesondere ist es möglich, die jeweilige Steuerungseinheit auf einem Gehäuse der jeweiligen elektronisch geregelten und/oder elektrischen Komponente, wie zumindest einer Pumpe und/oder zumindest eines Ventils, oder in deren Nähe anzuordnen und eine entsprechende elektrische Verbindung zwischen Komponente und deren Steuerungseinheit, wie der Pumpe und ihrer Steuerungseinheit bzw. dem Ventil und seiner Steuerungseinheit, vorzusehen. Auch die Signalleiter zum Ansteuern der jeweiligen Steuerungseinheiten der zumindest einen elektronisch geregelten und/oder elektrischen Komponente, insbesondere der zumindest einen Pumpe und/oder des zumindest einen Ventils können über den elektrischen Sammelverbinder des Thermomanagement-Moduls und den mit diesem verbundenen elektrischen Leiterstrang mit der Fahrzeugsteuerungseinheit signalverbunden werden, um die einzelnen Steuerungseinheiten z.B. von Pumpe und/oder Ventil entsprechend ansteuern zu können.

Ferner ist es möglich, in dem zumindest einen Thermomanagement-Modul zumindest eine mit fluidischen Leitern, insbesondere Fluidkanälen, und fluidischen Anschlüssen versehene Einheit anzuordnen zum Versorgen fluidischer Komponenten des Thermomanagement-Moduls mit zumindest einem fluidischen Medium, insbesondere zum Versorgen von Pumpen mit Kühlmittel. Die mit zumindest einem fluidischen Leiter, insbesondere Fluidkanal, und zumindest zwei fluidischen Anschlüssen versehene Einheit kann beispielsweise eine Trägerplatte oder das Trägerteil umfassen, der bzw. die die fluidischen Leiter, insbesondere Fluidkanäle, umfasst. Unter den fluidischen Komponenten des Thermomanagement-Moduls werden hier diejenigen elektronisch geregelten Komponenten verstanden, die von Medium durchströmt werden bzw. die Massenströme an Medium steuern oder regeln bzw. fördern können, wie Pumpen und Ventile. Jeder der fluidischen Leiter bzw. Fluidkanäle ist an seinen beiden Enden mit einem entsprechenden fluidischen Anschluss versehen zum Zuführen und Abführen von fluidischem Medium, wie Kühlmittel. An diese fluidischen Leiter und fluidischen Anschlüsse können im Thermomanagement-Modul insbesondere die zumindest eine Pumpe fluidisch angeschlossen sein oder werden, um die Zufuhr und Abfuhr von fluidischem Medium zu und von der zumindest einen Pumpe zu ermöglichen. Innerhalb des Thermomanagement-Moduls bzw. auf dem Trägerteil können diese Kühlkreisläufe entsprechend verlegt bzw. weitergeführt werden, über die Anschlüsse die außerhalb des Thermomanagement-Moduls liegenden fluidischen Leitungen der Kühlkreisläufe angeschlossen werden. Innerhalb der Einheit kann das gewünschte Routing der fluidischen Leiter vorkonfektioniert sein, so dass auf diese Einheit aus fluidischem Leiter/Leitern und Anschlüssen problemlos beispielsweise eine Pumpe aufgefügt, insbesondere aufgesteckt, werden kann. Es erfolgt dann lediglich noch eine elektrische Verbindung der Pumpe mit dem elektrischen Sammelverbinder des Thermomanagement-Moduls. Hiernach kann direkt der optimale Temperierbetrieb durch Fördern von Kühlmittel mittels der zumindest einen Pumpe innerhalb der Kühlkreisläufe erfolgen.

Das Thermomanagement-Modul umfasst somit vorteilhaft zumindest ein Trägerteil, auf dem zumindest eine Komponente zur Temperiermediumförderung und zumindest eine Komponente zur Massenstromregelung des Temperiermediums, wie beispielsweise von Kühlmittel als Temperiermedium, angeordnet werden können oder angeordnet sind bzw. in das diese Komponenten integriert werden können oder sind. Über das Thermomanagement-Modul bzw. dessen zumindest einen Trägerteil können vorzugsweise zumindest zwei der Teilkreisläufe des Temperierkreislaufs fluidisch miteinander verbunden werden, besonders bevorzugt drei Teilkreisläufe des Temperierkreislaufs. Es ist sowohl ein fludisches Verbinden der einzelnen Teilkreisläufe miteinander als auch ein fluidisches Trennen der einzelnen Teilkreisläufe voneinander möglich, je nach Stellung des zumindest einen Ventils, das bzw. die auf und/oder an dem zumindest einen Trägerteil des Thermomanagement-Moduls angeordnet wird/werden und zum Steuern bzw. Regeln der Massenströme an Temperiermedium, wie Kühlmittel, dient/dienen. Die Vor- und Rückläufe der zumindest zwei, insbesondere der zumindest drei, Teilkreisläufe sind über das Thermomanagement-Modul fluidisch miteinander verbindbar oder verbunden. Unter den Teilkreisläufen werden vorzugsweise solche verstanden, die in sich geschlossen sind, somit z.B. kein Kurzschluss zu einem anderen Teilkreislauf vorliegt und die jeweils über Vor- und Rücklauf an das Thermomanagement-Modul angeschlossen sein können oder angeschlossen sind. Das Thermomanagement-Modul bzw. dessen zumindest eines Trägerteil umfasst somit nicht nur elektrische, sondern vorteilhaft auch fluidische Verbindungswege, insbesondere Fluidkanäle, zum fluidischen Verbinden der Teilkreisläufe, die an diesem anschließbar sind oder angeschlossen werden, und ebenso zumindest eine Komponente zur Temperiermediumförderung, wie zumindest eine Pumpe, und zumindest eine Komponente zur Massenstromregelung, wie zumindest ein Ventil. Die zumindest eine Komponente zur Massenstromregelung und die zumindest eine Komponente zur Temperiermediumförderung können übliche Standardkomponenten sein, die auf, an oder in dem zumindest einen Trägerteil des Thermomanagement-Moduls angebracht werden. Das Trägerteil des Thermomanagement-Moduls bietet somit eine Struktur zur Anbringung dieser Standardkomponenten.

Das Thermomanagement-Modul kann bereits vollständig vorkonfektioniert werden, also inklusive aller elektronisch geregelten und/oder elektrischen Komponenten, fluidischen Leiter, elektrischen Leiter und fluidischen Anschlüsse sowie des elektrischen Sammelverbinders vorkonfektioniert bzw. ausgebildet werden. Dieses Thermomanagement-Modul kann im Fahrzeug als eine kompakte Einheit angeordnet und über den elektrischen Leiterstrang mit der Fahrzeugsteuerungseinheit elektrisch verbunden werden, so dass durch die Fahrzeugsteuerungseinheit ein Ansteuern der einzelnen Komponenten des Thermomanagement-Moduls problemlos direkt erfolgen kann.

Bei Vorsehen der mit fluidischen Leitern und fluidischen Anschlüssen versehenen Einheit zum Versorgen der fluidischen Komponenten des Thermomanagement-Moduls ist es auch nicht mehr erforderlich, zahlreiche fluidische Leitungen innerhalb des Fahrzeugs verteilt anzuordnen. Diese können vielmehr eingespart werden, da lediglich noch die fluidischen Leitungen der Kühlmittelkreisläufe zu und von einer Batterie, einem elektrischen Zuheizer, einer Leistungselektronik oder einer anderen thermischen Quelle oder Senke vorgesehen zu werden brauchen, nicht mehr jedoch im Bereich Pumpen, Aktuatoren und Sensoren, die in dem Thermomanagement-Modul aufgenommen sind.

Zu der näheren Erläuterung der Erfindung werden im Folgenden Ausführungsbeispiele von dieser näher anhand der Zeichnungen beschrieben. Diese zeigen in:
- Figur 1: eine Prinzipskizze einer elektrischen Verkabelung einer Fahrzeugsteuerungseinheit nach dem Stand der Technik mit einer Pumpe, einem Aktuator und einem Ventil, wobei seitens der Fahrzeugsteuerungseinheit nur ein elektrischer Sammelverbinder vorgesehen ist,
- Figur 2: eine Prinzipskizze einer zweiten Variante einer elektrischen Verkabelung einer Fahrzeugsteuerungseinheit nach dem Stand der Technik mit einer Pumpe, einem Aktuator und einem Ventil, wobei seitens der Fahrzeugsteuerungseinheit drei einzelne elektrische Verbindungen vorgesehen sind,
- Figur 3: eine Prinzipskizze einer ersten Ausführungsform einer erfindungsgemäßen Thermomanagementanordnung mit einem Thermomanagement-Modul mit einem elektrischen Sammelverbinder, der über einen elektrischen Leiterstrang mit einem elektrischen Verbinder einer Fahrzeugsteuerungseinheit elektrisch verbunden ist,
- Figur 4: eine Prinzipskizze einer Thermomanagementanordnung des Standes der Technik, umfassend eine Anzahl von n Pumpen, n Aktuatoren und n Sensoren, die jeweils einzeln über elektrische Leiter mit einem elektrischen Sammelverbinder einer Fahrzeugsteuerungseinheit elektrisch verbunden sind,
- Figur 5: eine Prinzipskizze einer Variante einer Thermomanagementanordnung des Standes der Technik, bei der eine Anzahl von n Pumpen, n Aktuatoren und n Sensoren jeweils einzeln elektrisch mit drei elektrischen Sammelverbindern einer Fahrzeugsteuerungseinheit elektrisch verbunden sind,
- Figur 6: eine Prinzipskizze einer zweiten Ausführungsform einer erfindungsgemäßen Thermomanagementanordnung, umfassend ein Thermomanagement-Modul mit einer Anzahl von n Pumpen, n Aktuatoren und n Sensoren sowie einem elektrischen Sammelverbinder, der über einen elektrischen Leiterstrang mit einem elektrischen Sammelverbinder einer Fahrzeugsteuerungseinheit elektrisch verbunden ist,
- Figur 7: eine Prinzipskizze einer dritten Ausführungsform einer erfindungsgemäßen Thermomanagementanordnung, umfassend ein Thermomanagement-Modul mit einer Anzahl von n Pumpen, n Aktuatoren und n Sensoren sowie einem elektrischen Sammelverbinder, der über einen elektrischen Leiterstrang mit drei elektrischen Verbindern einer Fahrzeugsteuerungseinheit elektrisch verbunden ist,
- Figur 8: eine Prinzipskizze eines Thermomanagementsystems des Standes der Technik, umfassend mehrere verschachtelte Kühlkreisläufe eines Fahrzeugs mit jeweils einzelnen elektrischen Leitern, die von den einzelnen Komponenten der Kühlkreisläufe zu einer Fahrzeugsteuerungseinheit führen,
- Figur 9: eine Prinzipskizze einer Ausführungsform eines erfindungsgemäßen Thermomanagementanordnung mit einem erfindungsgemäßen Thermomanagement-Modul und drei an diesem angeschlossenen Teilkreisläufen,
- Figur 10: eine Draufsicht auf eine Ausführungsform eines erfindungsgemäßen Thermomanagement-Moduls mit zwei Pumpen und zwei Ventilen, und
- Figur 11: eine skizzenhafte Draufsicht auf ein Fahrzeug mit einer erfindungsgemäßen Thermomanagementanordnung mit mehreren Teilkreisläufen und einem erfindungsgemäßen Thermomanagement-Modul.

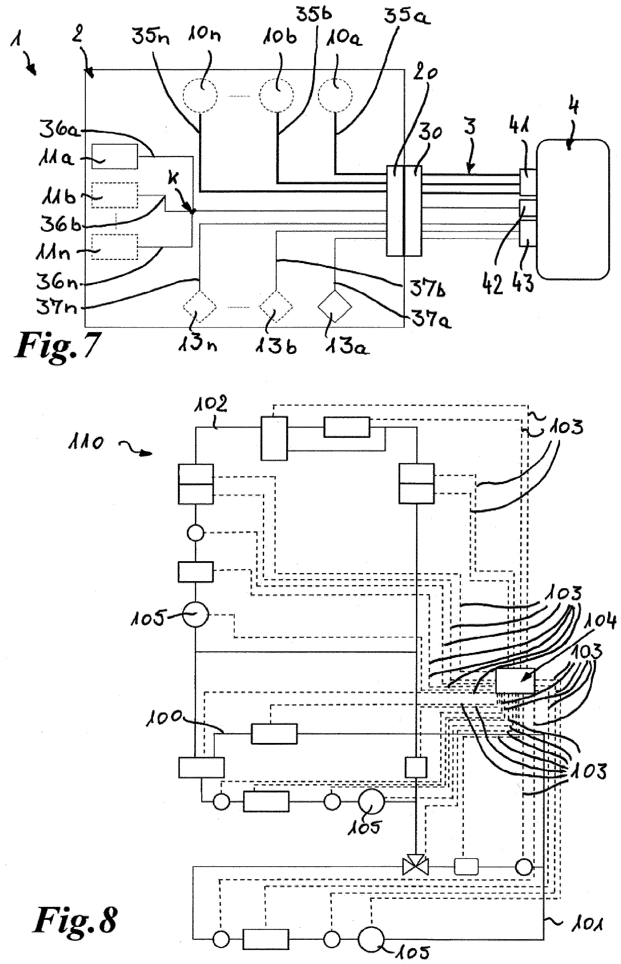

In Figur 8 ist eine Prinzipskizze eines Thermomanagementsystems 110 des Standes der Technik gezeigt mit einer großen Anzahl von elektronisch geregelten und elektrischen Komponenten. Diese Komponenten sind insbesondere ein bzw. mehrere Batterien, Steuereinheiten, Chiller, Pumpen 105, elektrische Zuheizer, Heizwärmetauscher, Ventile, Sensoren, Elektromotoren und Leistungselektronik.

In dem in Figur 8 gezeigten Beispiel eines Thermomanagementsystems 110 sind mehrere Kühlkreisläufe 100, 101, 102 ineinander verschachtelt gezeigt. Ferner ist eine große Anzahl von elektrischen Leitern 103 gezeigt, die jeweils von den einzelnen Komponenten der drei Kühlkreisläufe 100, 101, 102 zu einer Fahrzeugsteuerungseinheit 104 verlegt sind. Diese elektrischen Leiter 103 müssen innerhalb eines Fahrzeugs bzw. der Fahrzeugkarosserie in geeigneter Art und Weise untergebracht werden, so dass sich sehr komplexe Kabelbaumstrukturen ergeben. Je höher die Anzahl der Komponenten in den Kühlkreisläufen ist, desto komplexer werden die Kabelbaumstrukturen.

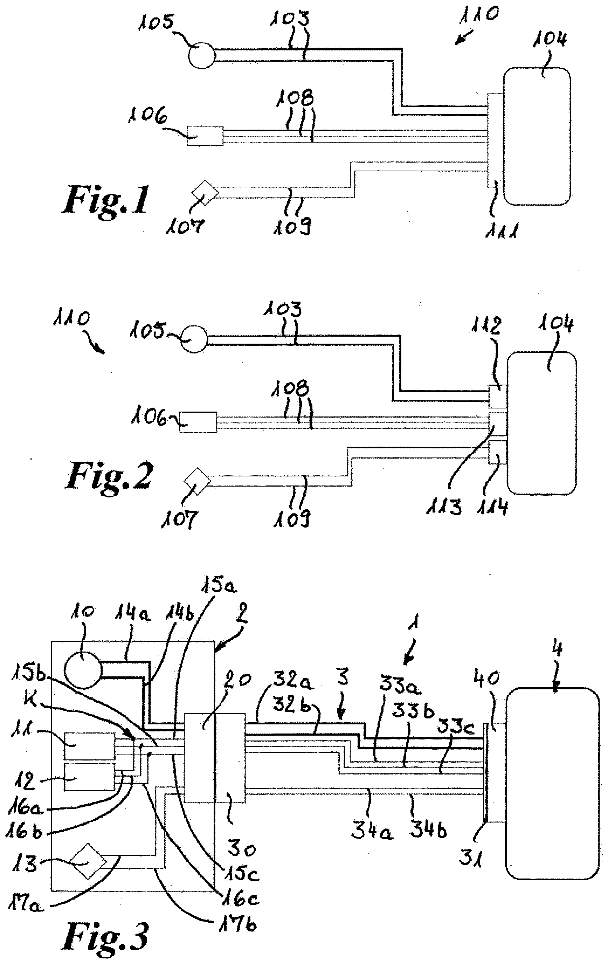

In den Figuren 1 und 2 ist ein kleiner Ausschnitt eines Thermomanagementsystems 110 des Standes der Technik gezeigt, wobei beispielhaft Fahrzeugsteuerungseinheit 104 und jeweils eine Pumpe 105, ein Aktuator 106 und ein Sensor 107 gezeigt sind. Die Pumpe 105, der Aktuator 106 und der Sensor 107 jeweils durch einzelne elektrische Leiter 103, 108 und 109 mit der Fahrzeugsteuerungseinheit 104 elektrisch verbunden. Bei der Variante nach Figur 1 ist die Fahrzeugsteuerungseinheit 104 mit einem elektrischen Sammelverbinder 111 zum Anschließen der elektrischen Leiter 103, 108, 109 der drei Komponenten der Pumpe 105, des Aktuators 106 und des Sensors 107 versehen. Bei der Variante nach Figur 2 sind drei einzelne elektrische Verbinder 112, 113, 114 an der Fahrzeugsteuerungseinheit 104 vorgesehen, um die elektrischen Leiter 103, 108, 109, die von der Pumpe, dem Aktuator 106 und dem Sensor 107 zu der Fahrzeugsteuerungseinheit 104 verlegt sind, an diese anzuschließen.

In Figur 3 ist eine erste Ausführungsform einer erfindungsgemäßen Thermomanagementanordnung 1 gezeigt. Diese bildet eine Untergruppe eines Thermomanagementsystems und umfasst ein Thermomanagement-Modul 2, das mit einem elektrischen Sammelverbinder 20 versehen ist. Der elektrische Sammelverbinder 20 dient zum Anschließen eines elektrischen Leiterstrangs 3. Letzterer ist an den elektrischen Sammelverbinder 20 mittels eines endseitig am elektrischen Leiterstrang 3 angeordneten elektrischen Verbinders 30 angeschlossen, beispielsweise durch Steckverbinden. Hierdurch ist ein lösbares Verbinden möglich. Grundsätzlich ist es ebenfalls möglich, eine feste Verbindung zwischen dem elektrischen Leiterstrang 3 und dem elektrischen Sammelverbinder 20 des Thermomanagement-Moduls 2 vorzusehen. Der elektrische Leiterstrang 3 ist an seinem dem ersten elektrischen Verbinder 30 gegenüberliegenden zweiten Ende mit einem zweiten elektrischen Verbinder 31 versehen. Der zweite elektrische Verbinder 31 kann mit einem elektrischen Sammelverbinder 40 einer Fahrzeugsteuereinheit 4 elektrisch verbunden werden, insbesondere ebenfalls durch Steckverbinden.

Das Thermomanagement-Modul 2 umfasst in dem in Figur 3 gezeigten Ausführungsbeispiel eine Pumpe 10, zwei Aktuatoren 11, 12 und einen Sensor 13. Diese elektronisch geregelten bzw. elektrischen Komponenten sind in räumlicher Nähe zueinander angeordnet und als Baugruppe zu dem Thermomanagement-Modul 2 zusammengefasst. Elektrische Leiter 14a, 14b sind von der Pumpe 10 zum elektrischen Sammelverbinder 20 des Thermomanagement-Modul 2, elektrische Leiter 15a, 15b, 15c von dem Aktuator 11 zu dem elektrischen Sammelverbinder 20 und elektrische Leiter 16a, 16b, 16c auf die drei elektrischen Leiter 15a, 15b und 15c geführt und mit diesen an Knotenpunkten K verbunden, um die elektrische Verbindung zum elektrischen Sammelverbinder 20 auch für den Aktuator 12 herzustellen. Elektrische Leiter 17a, 17b sind ferner von dem Sensor 13 zu dem elektrischen Sammelverbinder 20 geführt. Somit ist die elektrische Verkabelung innerhalb des Thermomanagement-Moduls 2 und dessen einzelnen Komponenten der Pumpe 10, der beiden Aktuatoren 11, 12 und des Sensors 13 vergleichsweise kurz, da die Verkabelung lediglich zu dem elektrischen Sammelverbinder 20 des Thermomanagement-Moduls 2 geführt ist.

Innerhalb eines Fahrzeugs, in dem die Thermomanagementanordnung 1 angeordnet ist, ist es somit nicht erforderlich, komplexe Kabelbäume zu verlegen, sondern lediglich von dem Thermomanagement-Modul 2 den elektrischen Leiterstrang 3 zu der Fahrzeugsteuerungseinrichtung 4 zu verlegen. Dies bedeutet einen deutlich geringeren Aufwand sowohl an Zeit als auch an Geld als eine jeweilige einzelne Verkabelung des Standes der Technik, wie sie beispielsweise in Figur 8 wiedergegeben ist.

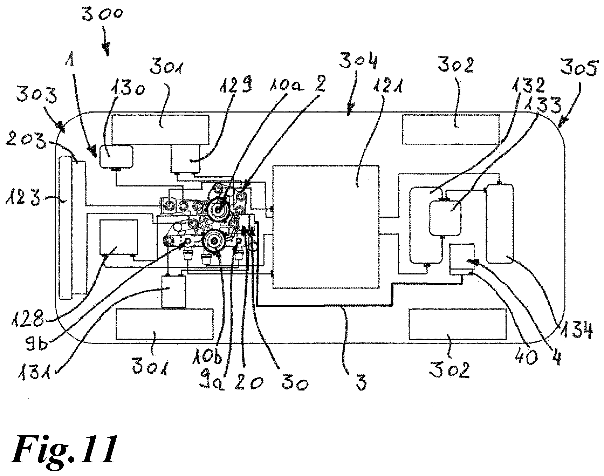

Die einzelnen Komponenten der Pumpe 10, der Aktuatoren 11, 12 und des Sensors 13 können jeweils mit einer eigenen Steuerungseinheit versehen sein, ebenso Ventile als weitere Komponenten, die in dem Thermomanagement-Modul zusammengefasst werden können. Das Thermomanagement-Modul 2 kann als eine Baueinheit, insbesondere auch ummantelt mit einem Gehäuse, im Fahrzeug an einer geeigneten Stelle angeordnet werden. Eine solche geeignete Stelle liegt üblicherweise in der Nähe von thermischen Quellen und thermischen Senken im Fahrzeug. Insbesondere ist eine zentrale Anordnung des Thermomanagement-Modul 2 im Fahrzeug vorgesehen. Unter einer zentralen Anordnung des Thermomanagement-Moduls 2 im Fahrzeug wird hier eine Anordnung verstanden, die bezüglich der Länge der Fluidwege eine optimale Positionierung aller im Thermomanagementsystem bzw. der Thermomanagementanordnung 1 befindlichen Verbraucher bzw. Komponenten vorsieht, um die thermischen Verluste beim Fluidtransport innerhalb der Thermomanagementanordnung 1 bzw. eines Thermomanagementsystems so gering wie möglich zu halten. Nicht nur die Komponenten der Pumpe 10, der beiden Aktuatoren 11, 12 und des Sensors 13 können Teil des Thermomanagement-Modul 2 sein, sondern auch unterschiedlichste Arten von Leistungselektronik, wie in Figur 11 angedeutet, die in einem Kühlmittelkreislauf vorgesehen sein kann.

Wie Figur 3 ebenfalls entnommen werden kann, umfasst der elektrische Leiterstrang 3 unterschiedliche Arten von elektrischen Leitern 32a, 32b, 33a, 33b, 33c, 34a und 34b, wobei die elektrischen Leiter 32a, 32b zum Leiten hoher elektrischer Ströme beispielsweise als Leistungsstromleiter ausgebildet sind, um die Pumpe 10 oder auch einen elektrischen Heizer mit Strom zu versorgen, die elektrischen Leiter 33a, 33b, 33c zum Übertragen von Bussignalen ausgebildet sind, somit als Busleitung, und die elektrischen Leiter 34a, 34b zum Übertragen von Sensorsignalen des Sensors 13 geeignet ausgebildet sind. Der elektrische Sammelverbinder 40 ist dementsprechend so ausgebildet, dass diese unterschiedlichen elektrischen Leiter dort angeschlossen werden können. Der elektrische Sammelverbinder 40 weist somit unterschiedlich ausgebildete Steckverbinder auf, um die unterschiedlichen elektrischen Leiter dort anschließen zu können. Ebenfalls sind die elektrischen Verbinder 30, 31, wie beispielsweise elektrischen Steckverbinder, die endseitig an dem elektrischen Leiterstrang 3 angeordnet sind, in entsprechender Weise ausgebildet, um eine Signalübertragung bzw. Übertragung auch von hohen elektrischen Strömen zu ermöglichen.

Es können seitens der Fahrzeugsteuerungseinheit 4 nicht nur ein elektrischer Sammelverbinder 40, sondern beispielsweise drei elektrische Verbinder (nicht gezeigt) zum separaten Anschließen der einzelnen Gruppen von elektrischen Leitern 32a, 32b bzw. 33a bis 33c bzw. 34a bis 34c des elektrischen Leiterstranges 3 vorgesehen sein.

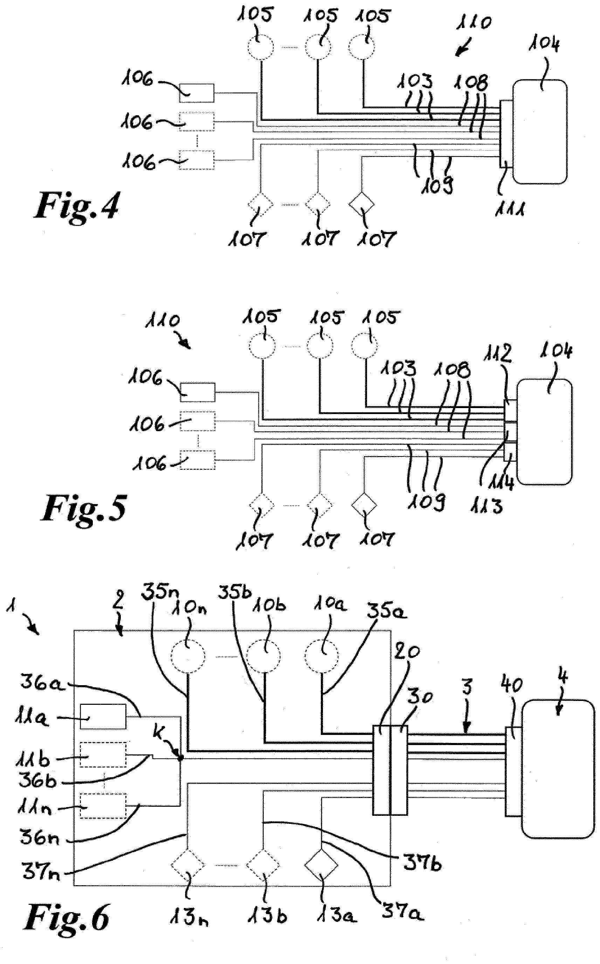

In den Figuren 4 und 5 sind wiederum Varianten des Thermomanagementsystems 110 des Standes der Technik gezeigt, wobei im Unterschied zu den Ausgestaltungen nach den Figuren 1 und 2 dieses jeweils mehrere Pumpen 105, Aktuatoren 106 und Sensoren 107 umfasst. Jede der Pumpen 105, Aktuatoren 106 und Sensoren 107 ist bei der Variante des Standes der Technik nach Figur 4 über den elektrischen Sammelverbinder 111 mit der Fahrzeugsteuerungseinheit 104 elektrisch verbunden bzw. bei der Variante nach Figur 5 mit drei einzelnen elektrischen Verbindern 112, 113 und 114 der Fahrzeugsteuerungseinheit 104. Da auch hierbei wiederum, wie den Figuren 4 und 5 unschwer zu entnehmen ist, eine große Anzahl an elektrischen Leitern 103, 108, 109 innerhalb eines Fahrzeugs, in dem das Thermomanagementsystem 110 angeordnet ist, verlegt werden muss, bedeutet dies wiederum einen sehr hohen Arbeitsaufwand und auch hohe Kosten für die einzelnen elektrischen Leiter und den Aufwand zum Verlegen von diesen in einem Fahrzeug.

Bei der in Figur 6 gezeigten Ausführungsvariante der erfindungsgemäßen Thermomanagementanordnung 1 ist diese Problematik des Standes der Technik behoben, dadurch, dass alle Pumpen 10a, 10b bis 10n, Aktuatoren 11a, 11b bis 11n und Sensoren 13a, 13b bis 13n als Baugruppe in dem Thermomanagement-Modul 2 zusammengefasst sind, wobei das Thermomanagement-Modul 2 mit dem elektrischen Sammelverbinder 20 versehen ist, um einen einheitlichen Anschluss für alle diese Komponenten des Thermomanagement-Moduls 2 vorzusehen. Der Zusatz "n" steht hier für eine unbestimmte bzw. beliebige Anzahl an Pumpen bzw. Aktuatoren bzw. Sensoren. Es ist somit auch bei dieser Ausführungsvariante möglich, den elektrischen Leiterstrang 3 als einzigen Leiterstrang zwischen dem Thermomanagement-Modul 2 und der Fahrzeugsteuerungseinheit 4 vorzusehen bzw. anzuordnen, somit den Arbeitsaufwand für das Verlegen von elektrischen Leitern innerhalb des Fahrzeugs so gering wie möglich zu halten. Es wird auch hier lediglich der elektrische Leiterstrang 3 innerhalb des Fahrzeugs 300 von dem Thermomanagement-Modul 2 zu der Fahrzeugsteuerungseinheit 4 hin verlegt, wie in Figur 11 skizziert.

Die Fahrzeugsteuerungseinheit 4 gemäß Figur 6 weist einen elektrischen Sammelverbinder 40 auf, an dem wiederum der elektrische Leiterstrang 3 angeschlossen ist. Anstelle dieses einen elektrischen Sammelverbinders 40 kann bzw. ist die Fahrzeugsteuerungseinheit 4, wie in der Ausführungsform nach Figur 7 gezeigt, beispielsweise auch drei einzelne elektrische Verbinder 41, 42, 43 aufweisen, mit denen der elektrische Leiterstrang 3 bzw. dessen jeweilige elektrische Leiter und Leitergruppen elektrisch verbunden (werden).

Wie den Figuren 6 und 7 ebenfalls entnommen werden kann, sind jeweils einzelne elektrische Leiter bzw. elektrische Leiterpaare 35a, 35b bis 35n von den Pumpen 10a, 10b bis 10n, elektrische Leitungen 36a, 36b bis 36n, die insbesondere dreiadrig sein können, von den Aktuatoren 11a, 11b bis 11n und elektrische Leiterpaare 37a, 37b bis 37n von den Sensoren 13a, 13b bis 13n zu dem elektrischen Sammelverbinder 20 des Thermomanagement-Moduls 2 verlegt. Die Verlegung dieser einzelnen Leiter, Leitungen bzw. Leiterpaare innerhalb des Thermomanagement-Moduls 2 kann individuell oder vorgegeben erfolgen. Es ist also möglich, die einzelnen Komponenten des Thermomanagement-Moduls 2 jeweils einzeln über Steckverbinder, die an die jeweilige Komponente, wie Pumpe, Aktuator und Sensor bzw. auch Ventile etc. einzeln angeschlossen werden, mit dem elektrischen Sammelverbinder 20 zu verbinden. Ebenfalls ist es möglich, bereits vorverlegte elektrische Leiter in dem Thermomanagement-Modul 2 vorzusehen, insbesondere in Form eines vorgegebenen Routings, so dass das individuelle Verlegen von elektrischen Leitern, Leiterpaaren und Leitungen innerhalb des Thermomanagement-Moduls 2 entfällt. Die elektrischen Leiter sind dann bereits im Thermomanagement-Modul 2 vorverlegt und die Pumpen, Sensoren, Aktuatoren, Ventile etc. werden lediglich an diese vorverlegten elektrischen Leiter angeschlossen.

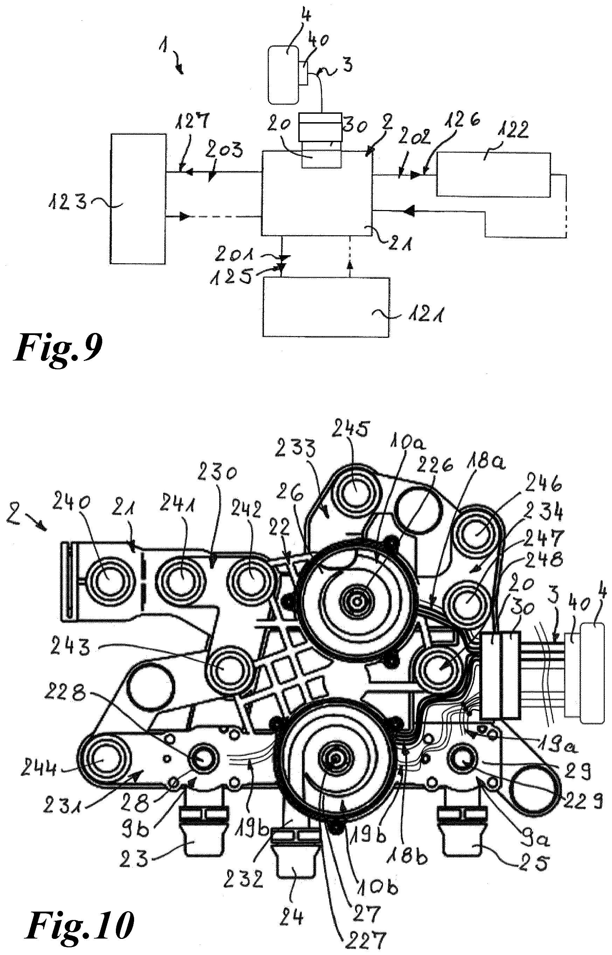

Neben dem Vorverlegen der elektrischen Leiter bzw. Leiterpaare und Leitungen innerhalb des Thermomanagement-Moduls 2 können auch fluidische Leitungen bereits vorgesehen werden, so dass an entsprechend endseitig an diesen fluidischen Leitungen vorgesehenen Anschlüssen jeweils die einzelnen Komponenten des Thermomanagement-Moduls 2 in Form von Pumpen, Sensoren und Ventilen fluidisch angeschlossen werden können. Das Ausbilden von Kühlkreisläufen innerhalb des Thermomanagement-Moduls 2 kann hierdurch ebenfalls vereinfacht werden. Beispielsweise sind an dem Trägerteil 21 des Thermomanagement-Moduls 2 Anschlüsse bzw. Fluidanschlusseinrichtungen 23, 24, 25, 240 bis 248 zum fluidführenden Anschließen des Thermomanagement-Moduls 2 an Fluidkreisläufe 201, 202, 203 vorgesehen und Fluidleitungen bzw. Fluidkanäle 230 bis 234 auf dem und/oder innerhalb des Trägerteils 21 des Thermomanagement-Moduls 2 zwischen den einzelnen Komponenten des Thermomanagement-Moduls 2, wie beispielhaft in Figur 10 gezeigt, so dass eine sehr schnelle und nicht fehleranfällige Montage der einzelnen Komponenten des Thermomanagement-Moduls 2 auch fluidisch erfolgen kann. Der Trägerteil 21 des Thermomanagement-Moduls 2 dient somit zur bauraumoptimierten und außerhalb eines Fahrzeugs vormontierbaren Anordnung der einzelnen Komponenten, wie beispielsweise eines Ventils, zumindest eines Aktuators, zumindest einer Pumpe, zumindest eines Sensors etc., wobei nicht nur die elektrischen Verbindungsleitungen zwischen diesen Komponenten, sondern auch Fluidleitungen zwischen diesen auf dem Trägerteil 21 des Thermomanagement-Moduls 2 vormontiert werden können. Die auf dem Trägerteil vormontierte bzw. vorgefertigte Baugruppe des Thermomanagement-Moduls 2 kann an unterschiedlichen Stellen oder auch an mehreren Stellen in einem Fahrzeug angeordnet werden, wobei sich insbesondere eine möglichst nahe Anordnung an einem zu regulierenden Bauteil, wie beispielsweise einer Batterie bzw. Traktionsoder Fahrzeugbatterie im Unterboden oder im Heck eines Fahrzeugs eignet. Hierdurch können die Fluidwege so kurz wie möglich gehalten werden. Es können dementsprechend auch mehrere Thermomanagement-Module in einem Fahrzeug angeordnet werden.

Beispielsweise kann ein solches Thermomanagement-Modul 2 bzw. dessen Trägerteil 21 eine Kantenlänge von etwa 30 cm aufweisen und somit insbesondere der Trägerteil annähernd quadratisch ausgebildet sein. Selbstverständlich ist es ebenfalls möglich, das Thermomanagement-Modul 2 bzw. dessen Trägerteil auch anderweitig rechteckig oder beliebig anders zu formen. Ebenfalls sind größere Abmessungen möglich, z.B. wenn eine größere Anzahl von Komponenten, wie Pumpen, Sensoren, Aktuatoren, Ventile etc., darauf montiert werden sollen. Der Trägerteil 21 des Thermomanagement-Moduls 2 trägt vorteilhaft zumindest eine Pumpe und mindestens ein Ventil, insbesondere zumindest zwei Ventile, z.B. zumindest ein bis zehn Ventile. Der Trägerteil 21 des Thermomanagement-Moduls 2 umfasst Fluidleitungen bzw. Fluidkanäle, die in diesen integriert und/oder auf diesen aufgesetzt bzw. auf und/oder unter diesem angeordnet sein können, wie in Figur 10 zu sehen. Insbesondere weist das Thermomanagement-Modul 2 bzw. dessen Trägerteil 21 eine Fläche von bis zu einem halben Quadratmeter auf, insbesondere lediglich von einem Viertelquadratmeter. Es ist vorteilhaft eine kompakte Ausführung des Thermomanagement-Moduls 2 vorgesehen, das insbesondere die bereits genannte Flächenausdehnung von 30 cm x 30 cm oder z.B. von 40 cm x 40 cm oder 50 cm x 50 cm oder beliebige Zwischengrößen oder auch größere Abmessungen aufweisen kann, insbesondere eine Flächenausdehnung von 900 cm² bis 2.500 cm², bei großen elektrisch betriebenen oder Brennstoffzellen-Fahrzeugen eine Flächenausdehnung von bis zu 0,5 m². Das Thermomanagement-Modul 2 weist ferner beispielsweise eine Höhe von bis zu 40 cm auf. Die Anordnung des Thermomanagement-Moduls 2 bzw. von dessen Trägerteil im Raum kann beliebig sein, z.B. in etwa waagerechter Ausrichtung im Raum. Der zumindest eine Trägerteil wird insbesondere nahe unter der Motorhaube eines Fahrzeugs angeordnet. Dadurch sind die Fluidanschlusseinrichtungen des Thermomanagement-Moduls 2 gut zugänglich, so dass Fluidleitungen der Teilkreisläufe des Temperierkreislaufs an diese problemlos angeschlossen werden können.

In Figur 10 ist ein Beispiel für ein Trägerteil 21 des Thermomanagement-Moduls 2 gezeigt. Dieses ist teilweise gitterförmig ausgebildet. Hierdurch ist eine thermische Entkopplung einzelner Bereiche des Trägerteils 21 bzw. tragenden Strukturbauteils von anderen benachbarten Bereichen möglich, da über den jeweiligen gitterförmigen Bereich 22 des Trägerteils 21 wenig oder kaum Wärme übertragen wird/werden kann. Andere Bereiche des Trägerteils 21 können gezielt thermisch gekoppelt werden, wobei in diesen Bereichen dann beispielsweise keine gitterförmige Ausbildung des Trägerteils 21 vorgesehen wird. Bei dem Trägerteil 21 können Bereiche, die nicht fluidische Funktionen erfüllen sollen, gitterförmig ausgebildet.

Zum Anschließen von Fluidleitungen 125, 126, 127 der Kühl- bzw. Teilkreisläufe 201, 202, 203 eines Temperierkreislaufs des Fahrzeugs 300, wie in Figur 9 angedeutet, an das Thermomanagement-Modul 2 bzw. dessen Trägerteil 21 weist letzterer eine Anzahl an Fluidanschlusseinrichtungen 23, 24, 25, 240, 241, 242, 243, 244, 245, 246, 247, 248 auf. Zum Auffügen der Ventile und Pumpen auf den Trägerteil weist dieser zwei Aufnahmebereiche 26, 27 für jeweils eine Pumpe 10a, 10b und zwei Aufnahmebereiche 28, 29 für jeweils ein Ventil 9a, 9b auf. Zum Antreiben der Pumpen 10a, 10b und Ventile 9a, 9b sind jeweils Antriebswellen 226, 227 und 228, 229 vorgesehen, die etwa parallel zueinander und in Bezug zu den Trägerteil 21 etwa senkrecht zu diesem aus diesem herausragen. Die Pumpen 10a, 10b und Ventile 9a, 9b sind über Fluidkanäle 230, 231, 232, 233, 234 fluidisch mit den Fluidanschlusseinrichtungen 23, 24, 25 sowie den weiteren Fluidanschlusseinrichtungen 240 bis 248 auf der Oberseite des Trägerteils 21 und über elektrische Leiter 18a, 18b, 19a, 19b, die sich in oder auf dem Trägerteil 21 erstrecken (in Figur 10 lediglich angedeutet), mit dem elektrischen Sammelverbinder 20 elektrisch verbunden.

Der in Figur 9 skizzierte Temperierkreislauf umfasst drei Teilkreisläufe 201, 202, 203, nämlich den ersten Kühl- bzw. Teilkreislauf 201, der zum Temperieren einer Batterie bzw. Fahrzeugs-/Traktionsbatterie 121 bzw. eines entsprechenden Batteriesystems dient, den zweiten Teilkreislauf 201, der zum Temperieren von Elektronikkomponenten 122 dient, und den dritten Teilkreislauf 203, der einen Wärmeübertrager 123 in einem vorderen Bereich eines Fahrzeugs 300 (siehe Figur 11) umfasst, der zur Wärmeaufnahme aus der Umgebungsluft und Wärmeabgabe an diese bzw. zur Wärmeübertragung der Wärme aus der Umgebungsluft in das Temperiermedium, das durch den dritten Teilkreislauf 203 strömt, und aus diesem zur Wärmeabgabe an die Umgebungsluft dient. Dieser dritte Teilkreislauf 203 ist somit der Komfortkreislauf, da er zur Klimatisierung des Innenraums des Fahrzeugs 300 dient, während der erste Teilkreislauf 201 zum Temperieren der Batterie bzw. Traktionsbatterie 121 des Fahrzeugs 300 dient und der zweite Teilkreislauf 202 zum Temperieren der zumindest einen Elektronikkomponente 122. Zur Temperierung des Innenraums des Fahrzeugs 300 kann hinter Lüftungsklappen im Dashboard des Fahrzeugs eine sog. HVAC (Heating Ventilation Air Conditioning Unit) eingesetzt werden, die im Wesentlichen zumindest zwei Wärmetauscher beinhaltet. Dies ist zum einen ein Heizungswärmetauscher, durch den Kühlwasser, insbesondere im Winter erwärmtes Kühlwasser, geleitet wird. Dieser Heizungswärmetauscher ist üblicherweise an den Komfortkreislauf gekoppelt, also an den dritten Teilkreislauf 203. Die für den Innenraum vorgesehene Luft bzw. Außen- oder Umgebungsluft strömt durch Ventilation über den Heizungswärmetauscher und wird dabei erwärmt. Die Wärme des Kühlwassers kann durch Abwärme verschiedener Fahrzeugkomponenten bereitgestellt werden, wobei die bei einem batterieelektrischen Fahrzeug (BEV) abfallende Wärmemenge jedoch meist nicht ausreichen wird, oder durch einen PTC-Zuheizer oder durch einen Wärmetauscher einer Wärmepumpe, was einen Betrieb eines Kältekreises im Umkehrbetrieb bedeutet bzw. ein Liefern erforderlicher Wärme durch die heiße Seite eines Kältekreises. Ferner kann dort ein Verdampfer des Kältekreislaufs angeordnet werden, der geeignet ist, nach dem gleichen Verfahren Luft zu kühlen. Außerdem kann auch ein dritter Wärmetauscher vorgesehen sein. Ein solcher kann ein Wärmetauscher einer Wärmepumpe sein, der Wärme bereitstellt. Alternativ kann Wärme direkt an die Luft übertragen werden oder Wärme wird dem Kühlkreislauf bereitgestellt und von diesem erfolgt ein Wärmeübertrag an die Luft. Der vorstehend erwähnte Verdampfer ist eine Komponente eines Kältemittelkreislaufes, in dem Kältemittel verdampft. Dabei wird Wärme durch das Kältemittel aufgenommen. Der Verdampfer kann einen Luftstrom in der HVAC-Einheit erwärmen. Ein Chiller ist neben dem Verdampfer eines Kältemittelkreislaufes ein weiterer Wärmetauscher an der sog. kalten Seite eines Kältemittelkreislaufes. Ein Chiller wird meist parallel, ggf. in Reihe, zu dem Verdampfer angeordnet und kühlt eine Komponente oder ein anderes Temperiermedium, wie Kühlwasser, ist nicht in der HVAC-Einheit angeordnet und kühlt keinen Luftstrom.

Es können somit zwei bis drei oder sogar mehr Wärmequellen und Wärmesenken in die einzelnen Teilkreisläufe integriert oder separat angeordnet werden. In Figur 9 ist somit der Minimalumfang an Teilkreisläufen 201, 202 und 203 eines solchen Temperierkreislaufs eines Fahrzeugs 300 zum Temperieren von dessen Komponenten gezeigt. Alle Teilkreisläufe 201, 202 und 203 des Temperierkreislaufs sind mit dem Thermomanagement-Modul 2 fluidisch verbunden. Über das Thermomanagement-Modul 2 können diese einzelnen Teilkreisläufe 201, 202 und 203 miteinander fluidisch verbunden bzw. voneinander getrennt werden. Zu diesem Zweck umfasst das Thermomanagement-Modul 2 die zumindest eine Pumpe und die zumindest zwei Ventile. Alle drei Teilkreisläufe 201, 202, 203 sind in sich geschlossen, es liegt somit kein Kurzschluss zwischen diesen vor.

In Figur 11 ist skizzenhaft eine Draufsicht auf das Fahrzeug 300 gezeigt, wobei dieses hier zwei Vorderräder 301, zwei Hinterräder 302, einen vorderen Fahrzeugbereich 303 mit Wärmeübertrager 123 und Inverter 128, im Bereich des einen Vorderrades 301 Chiller 129 und einen Temperiermediumtank 130, z.B. Kühlmitteltank, im Bereich des anderen Vorderrades 301 einen PTC-Zuheizer 131, im Übergang vom vorderen Fahrzeugbereich 303 in einen mittleren Fahrzeugbereich 304 das Thermomanagement-Modul 2 der Thermomanagementanordnung 1, im mittleren Fahrzeugbereich 304 die Batterie 121 und im hinteren Fahrzeugbereich 305 einen Elektromotor 132 mit Leistungselektronik 133 und Charger 134 umfasst. Erkennbar erstreckt sich eine Anzahl von Fluidleitungen der einzelnen Teilkreisläufe des Temperierkreislaufs des Fahrzeugs 300 zwischen dem Thermomanagement-Modul 2 und den einzelnen vorstehend genannten Fahrzeugkomponenten. Auf dem Thermomanagement-Modul 2 sind zwei Pumpen 10a, 10b und zwei Ventile 9a, 9b aufgenommen zur Förderung des Temperiermediums und zur Regelung der Massenströme an Temperiermedium in den einzelnen Teilkreisläufen des Temperierkreislaufs. An dem Thermomanagement-Modul 2 ist der elektrische Sammelverbinder 20 angeordnet. Von den beiden Pumpen 10a, 10b und beiden Ventile 9a, 9b bzw. deren nicht gezeigten Aktuatoren erstrecken sich die elektrischen Leiter 18a, 18b, 19a, 19b zu dem elektrischen Sammelverbinder 20 und sind an diesem zur Daten- und Signalübertragung sowie Energieversorgung angeschlossen. An den elektrischen Sammelverbinder 20 ist ferner der elektrische Leiterstrang 3 angeschlossen, der sich zu der Fahrzeugsteuerungseinheit 4 im hinteren Fahrzeugbereich 305 erstreckt.

Der Trägerteil 21 des Thermomanagement-Moduls 2 ist in den in den Figuren gezeigten Ausführungsvarianten als Spritzgussteil ausgebildet, so dass beliebige Ausführungsvarianten kostengünstig hergestellt werden können. Ein Bestücken des Trägerteils 21 mit den entsprechenden Fluidkomponenten in Form von Pumpen und Ventilen bzw. Standard-Pumpen und Standard-Ventilen, Sensoren, Aktoren kann unabhängig von der anwendungsspezifisch optimierten Formgebung des Trägerteils 21, insbesondere von einer Seite aus, problemlos erfolgen.

Es kann somit lediglich eine elektrische Verbindung über den elektrischen Leiterstrang 3, der zwischen der Fahrzeugsteuerungseinheit 4 und dem Thermomanagement-Modul 2 angeordnet ist, vorgesehen werden. Es entsteht somit bezüglich des Thermomanagement-Moduls 2 eine autarke Einheit, die an einer geeigneten Stelle in einem Fahrzeug angeordnet werden kann, insbesondere zentral in dem Fahrzeug, und die die elektronisch geregelten und/oder elektrischen Komponenten eines Thermomanagementsystems, somit die elektronisch geregelten und/oder elektrischen Komponenten, die bei einem Thermomanagementsystem entlang von Kühlkreisläufen zur Temperierung von Fluid, wie Kühlmittel, angeordnet sind, umfasst.

Die komplette Intelligenz bezüglich der Steuerung liegt bei der Fahrzeugsteuerungseinheit 4. Diese kann auf einzelne Steuerungseinheiten beispielsweise seitens der Pumpen und Ventile sowie Aktuatoren zugreifen und diese entsprechend in der gewünschten Weise ansteuern.

Neben den im Vorstehenden geschriebenen und in den Figuren gezeigten Ausführungsvarianten einer Thermomanagementanordnung für ein Fahrzeug können noch zahlreiche weitere gebildet werden, insbesondere auch beliebige Kombinationen der vorstehend genannten Merkmale, wobei jeweils eine Anzahl elektronisch geregelter und/oder elektrischer Komponenten, wie Pumpen, Aktuatoren, Ventilen, Sensoren, als Baugruppe in räumlicher Nähe zueinander angeordnet und als zumindest ein Thermomanagement-Modul zusammengefasst sind, wobei das Thermomanagement-Modul einen elektrischen Sammelverbinder aufweist, mit dem die einzelnen elektronisch geregelten und/oder elektrischen Komponenten des Thermomanagement-Moduls elektrisch verbindbar oder verbunden sind. Es erstreckt sich nur ein elektrischer Leiterstrang zwischen dem Thermomanagement-Modul und einer Fahrzeugsteuerungseinheit des Fahrzeugs. Das Fahrzeug kann hier insbesondere ein Elektrofahrzeug oder ein batterieelektrisches Fahrzeug sein, somit ein Fahrzeug, das ein Thermomanagementsystem umfasst.

### Bezugszeichenliste

- 1: Thermomanagementanordnung
- 2: Thermomanagement-Modul
- 3: elektrischer Leiterstrang
- 4: Fahrzeugsteuerungseinheit
- 9a: Ventil
- 9b: Ventil
- 10: Pumpe
- 10a: Pumpe
- 10b: Pumpe
- 10n: Pumpe
- 11: Aktuator
- 11a: Aktuator
- 11b: Aktuator
- 11n: Aktuator
- 12: Aktuator
- 13: Sensor
- 13a: Sensor
- 13b: Sensor
- 13n: Sensor
- 14a: elektrischer Leiter
- 14b: elektrischer Leiter
- 15a: elektrischer Leiter
- 15b: elektrischer Leiter
- 15c: elektrischer Leiter
- 16a: elektrischer Leiter
- 16b: elektrischer Leiter
- 16c: elektrischer Leiter
- 17a: elektrischer Leiter
- 17b: elektrischer Leiter
- 18a: elektrischer Leiter
- 18b: elektrischer Leiter
- 19a: elektrischer Leiter
- 19b: elektrischer Leiter
- 20: elektrischer Sammelverbinder
- 21: Trägerteil
- 22: gitterförmiger Bereich
- 23: Fluidanschlusseinrichtung
- 24: Fluidanschlusseinrichtung
- 25: Fluidanschlusseinrichtung
- 26: Aufnahmebereich für Pumpe
- 27: Aufnahmebereich für Pumpe
- 28: Aufnahmebereich für Ventil
- 29: Aufnahmebereich für Ventil
- 30: erster elektrischer Verbinder
- 31: zweiter elektrischer Verbinder
- 32a: elektrischer Leiter
- 32b: elektrischer Leiter
- 33a: elektrischer Leiter
- 33b: elektrischer Leiter
- 33c: elektrischer Leiter
- 34a: elektrischer Leiter
- 34b: elektrischer Leiter
- 35a: elektrisches Leiterpaar
- 35b: elektrisches Leiterpaar
- 35n: elektrisches Leiterpaar
- 36a: elektrische Leitung
- 36b: elektrische Leitung
- 36n: elektrische Leitung
- 37a: elektrisches Leiterpaar
- 37b: elektrisches Leiterpaar
- 37n: elektrisches Leiterpaar
- 40: elektrischer Sammelverbinder
- 41: elektrischer Verbinder
- 42: elektrischer Verbinder
- 43: elektrischer Verbinder
- 100: erster Kühlkreislauf
- 101: zweiter Kühlkreislauf
- 102: dritter Kühlkreislauf
- 103: elektrischer Leiter
- 104: Fahrzeugsteuerungseinheit
- 105: Pumpe
- 106: Aktuator
- 107: Sensor
- 108: elektrischer Leiter
- 109: elektrischer Leiter
- 110: Thermomanagementsystem
- 111: elektrischer Sammelverbinder
- 112: elektrischer Verbinder
- 113: elektrischer Verbinder
- 114: elektrischer Verbinder
- 121: Batterie/Traktionsbatterie
- 122: Elektronikkomponente
- 123: Wärmeübertrager
- 125: Fluidleitung
- 126: Fluidleitung
- 127: Fluidleitung
- 128: Inverter
- 129: Chiller
- 130: Temperiermediumtank
- 131: PTC-Zuheizer
- 132: Elektromotor
- 133: Leistungselektronik
- 134: Charger
- 201: erster Teilkreislauf
- 202: zweiter Teilkreislauf
- 203: dritter Teilkreislauf
- 226: Antriebswelle
- 227: Antriebswelle
- 228: Antriebswelle
- 229: Antriebswelle
- 230: Fluidkanal
- 231: Fluidkanal
- 232: Fluidkanal
- 233: Fluidkanal
- 234: Fluidkanal
- 240: Fluidanschlusseinrichtung
- 241: Fluidanschlusseinrichtung
- 242: Fluidanschlusseinrichtung
- 243: Fluidanschlusseinrichtung
- 244: Fluidanschlusseinrichtung
- 245: Fluidanschlusseinrichtung
- 246: Fluidanschlusseinrichtung
- 247: Fluidanschlusseinrichtung
- 248: Fluidanschlusseinrichtung
- 300: Fahrzeug
- 301: Vorderrad
- 302: Hinterrad
- 303: vorderer Fahrzeugbereich
- 304: mittlerer Fahrzeugbereich
- 305: hinterer Fahrzeugbereich
- K: Knotenpunkt

## Patentansprüche

1. Thermomanagementanordnung (1) für ein Fahrzeug, umfassend eine Anzahl elektronisch geregelter und/oder elektrischer Komponenten (9a, 9b, 10, 10a, 10b, 10n, 11, 11a, 11b, 11n, 12, 13, 13a, 13b, 13n), eine Anzahl elektrischer Leiter und zumindest eine Fahrzeugsteuerungseinheit (4) mit zumindest einem elektrischen Verbinder (40, 41, 42, 43) zum elektrischen Verbinden der Anzahl elektronisch geregelter und/oder elektrischer Komponenten (9a, 9b, 10, 10a, 10b, 10n, 11, 11a, 11b, 11n, 12, 13, 13a, 13b, 13n) mit der zumindest einen Fahrzeugsteuerungseinheit (4),
**dadurch gekennzeichnet, dass**
die Thermomanagementanordnung (1) zumindest ein Thermomanagement-Modul (2) umfasst, das die Anzahl elektronisch geregelter und/oder elektrischer Komponenten (9a, 9b, 10, 10a, 10b, 10n, 11, 11a, 11b, 11n, 12, 13, 13a, 13b, 13n), die als eine Baugruppe in räumlicher Nähe zueinander angeordnet sind, umfasst und das zumindest eine Thermomanagement-Modul (2) einen elektrischen Sammelverbinder (20) aufweist, wobei die Anzahl elektronisch geregelter und/oder
elektrischer Komponenten (9a, 9b, 10, 10a, 10b, 10n, 11, 11a, 11b, 11n, 12, 13, 13a, 13b, 13n) des Thermomanagement-Moduls (2) elektrisch mit dem elektrischen Sammelverbinder (40, 41, 42, 43) des zumindest einen Thermomanagement-Moduls (2) verbindbar oder verbunden ist und sich ein elektrischer Leiterstrang (3) zwischen dem Thermomanagement-Modul (2) und der Fahrzeugsteuerungseinheit (4) erstreckt.

2. Thermomanagementanordnung (1) nach Anspruch 1,
**dadurch gekennzeichnet, dass**
zum elektrischen Verbinden der Anzahl elektronisch geregelter und/oder elektrischer Komponenten (9a, 9b, 10, 10a, 10b, 10n, 11, 11a, 11b, 11n, 12, 13, 13a, 13b, 13n) des Thermomanagement-Moduls (2) mit dessen elektrischen Sammelverbinder (20) in dem zumindest einen Thermomanagement-Modul (2) vorverlegte elektrische Leiter (14a, 14b, 15a, 15b, 15c, 16a, 16b, 16c, 17a, 17b, 18a, 18b, 19a, 19b, 35a, 35b, 35n, 36a, 36b, 36n, 37a, 37b, 37n) angeordnet sind.

3. Thermomanagement-Modul (2) nach Anspruch 1 oder 2,
**dadurch gekennzeichnet, dass**
die Anzahl elektronisch geregelter und/oder elektrischer Komponenten (9a, 9b, 10, 10a, 10b, 10n, 11, 11a, 11b, 11n, 12, 12a, 12b, 12n, 13, 13a, 13b, 13n) auf einem Trägerteil (21) des Thermomanagement-Moduls (2) angeordnet ist.

4. Thermomanagementanordnung (1) nach Anspruch 1 oder 2,
**dadurch gekennzeichnet, dass**
das zumindest eine Thermomanagement-Modul (2) eine autarke Einheit ist.

5. Thermomanagementanordnung (1) nach einem der vorstehenden Ansprüche,
**dadurch gekennzeichnet, dass**
das zumindest eine Thermomanagement-Modul (2) als elektronisch geregelte und/oder elektrische Komponenten eine oder mehrere Pumpen (10, 10a, 10b, 10n), Sensoren (13, 13a, 13b, 13n), Ventile (9a, 9b), Aktuatoren (11, 11a, 11b, 11n, 12), insbesondere Antriebseinrichtungen für Ventile (9a, 9b), umfasst.

6. Thermomanagementanordnung (1) nach einem der vorstehenden Ansprüche,
**dadurch gekennzeichnet, dass**
der elektrische Sammelverbinder (20) des zumindest einen Thermomanagement-Moduls (2) zum Anschließen unterschiedlicher elektrischer Leiter (14a, 14b, 15a, 15b, 15c, 16a, 16b, 16c, 17a, 17b, 18a, 18b, 19a, 19b, 35a, 35b, 35n, 36a, 36b, 36n, 37a, 37b, 37n) ausgebildet ist.

7. Thermomanagementanordnung (1) nach Anspruch 6,
**dadurch gekennzeichnet, dass**
der elektrische Sammelverbinder (20) zum Anschließen zumindest eines Leistungsstromleiters (35a, 35b, 35n) zum Versorgen einer Pumpe (10, 10a, 10b, 10n) und/oder eines elektrischen Heizers, zumindest eines elektrischen Leiters (37a, 37b, 37n) zum Übertragen von Sensorsignalen, insbesondere Signalen eines Temperatursensors, und zumindest einer Datenbusleitung (36a, 36b, 36n) zum Übertragen von Bussignalen ausgebildet ist.

8. Thermomanagementanordnung (1) nach einem der Ansprüche 5 bis 7,
**dadurch gekennzeichnet, dass**
die elektronisch geregelte und/oder elektrische Komponente (9a, 9b, 10, 10a, 10b, 10n, 11, 11a, 11b, 11n, 12, 13, 13a, 13b, 13n), insbesondere die zumindest eine Pumpe (10, 10a, 10b, 10n) und/oder das zumindest eine Ventil (9a, 9b), mit einer eigenen Steuerungseinheit versehbar oder versehen ist.

9. Thermomanagementanordnung (1) nach einem der vorstehenden Ansprüche,
**dadurch gekennzeichnet, dass**
in dem zumindest einen Thermomanagement-Modul (2) zumindest eine mit fluidischen Leitern, insbesondere Fluidkanälen (230, 231, 232, 233, 234), und fluidischen Anschlüssen (23, 24, 25, 240, 241, 242, 243, 244, 245, 246, 247, 248) versehene Einheit angeordnet ist zum Versorgen fluidischer Komponenten (9a, 9b, 10, 10a, 10b, 10n) des Thermomanagement-Moduls (2) mit zumindest einem fluidischen Medium, insbesondere mit Kühlmittel.

10. Thermomanagementanordnung (1) nach einem der Ansprüche 3 bis 9,
**dadurch gekennzeichnet, dass**
die zumindest eine mit fluidischen Leitern, insbesondere Fluidkanälen (230, 231, 232, 233, 234), und fluidischen Anschlüssen (23, 24, 25, 240, 241, 242, 243, 244, 245, 246, 247, 248) versehene Einheit zumindest eine Trägerplatte oder den Trägerteil (21) des Thermomanagement-Moduls (2) umfasst zum Anordnen der fluidischen Leiter und fluidischen Anschlüsse.

11. Fahrzeug (300), insbesondere Elektrofahrzeug oder batterieelektrisches Fahrzeug,
**dadurch gekennzeichnet, dass**
das Fahrzeug (300) zumindest eine Thermomanagementanordnung (1) nach einem der vorstehenden Ansprüche umfasst.
